(19) Europäisches Patentamt
European Patent Office
Office européen des brevets

(11) **EP 1 061 091 B1**

(12) **EUROPÄISCHE PATENTSCHRIFT**

(45) Veröffentlichungstag und Bekanntmachung des Hinweises auf die Patenterteilung:
**15.04.2009 Patentblatt 2009/16**

(51) Int Cl.:
*C08G 18/08* (2006.01)    *C08G 18/28* (2006.01)
*C08G 18/78* (2006.01)    *C07D 251/34* (2006.01)

(21) Anmeldenummer: **00111085.7**

(22) Anmeldetag: **05.06.2000**

(54) **Lichtechte Polyisocyanate mit guter Löslichkeit in unpolaren Lösungsmitteln**

Lightfast polyisocyanate with good solvability in non polar solvents

Polyisocyanate stable à la lumière ayant une solvabilité élevée dans des solvants non polaires

(84) Benannte Vertragsstaaten:
**AT BE CH CY DE DK ES FI FR GB GR IE IT LI LU MC NL PT SE**

(30) Priorität: **16.06.1999 DE 19927411**

(43) Veröffentlichungstag der Anmeldung:
**20.12.2000 Patentblatt 2000/51**

(73) Patentinhaber: **Bayer MaterialScience AG**
**51368 Leverkusen (DE)**

(72) Erfinder:
• **Danielmeier, Karsten, Dr.**
**Bethel Park, PA 15102 (US)**
• **Schmalstieg, Lutz, Dr.**
**50676 Köln (DE)**
• **Laas, Hans-Josef, Dr.**
**50733 Köln (DE)**
• **Mertes, Harald, Dr.**
**50670 Köln (DE)**
• **Jahn, Reinhard**
**51375 Leverkusen (DE)**

(56) Entgegenhaltungen:
**EP-A- 0 303 150    EP-A- 0 496 208**
**EP-A- 0 682 012**

• **LAAS H J ET AL: "ZUR SYNTHESE ALIPHATISCHER POLYISOCYANATE- LACKPOLYISOCYANATE MIT BIURET-, ISOCYANURAT- ODER URETDIONSTRUKTUR THE SYNTHESIS OF ALIPHATIC POLYISOCYANATES CONTAINING BIURET, ISOCYANURATE OR URETDIONE BACKBONES FOR USE IN COATINGS" JOURNAL FUR PRAKTISCHE CHEMIE, CHEMIKER ZEITUNG, WILEY VCH, WEINHEIM, DE, Bd. 336, Nr. 3, 1994, Seiten 185-200, XP000441642 ISSN: 1436-9966**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft in unpolaren Lösungsmitteln lösliche Polyisocyanatgemische, ein Verfahren zu ihrer Herstellung und ihre Verwendung als Ausgangskomponente bei der Herstellung von Polyurethankunststoffen, insbesondere als Vernetzer für mit unpolaren Lösungsmitteln hochverdünnbaren Lackbindemitteln und/oder -bindemittelkomponenten mit gegenüber Isocyanatgruppen reaktionsfähigen Gruppen.

Polyisocyanate mit aliphatisch bzw. cycloaliphatisch gebundenen Isocyanatgruppen können in Vernetzerkomponenten als qualitativ hochwertige, nicht vergilbende Zweikomponenten-Polyurethan (2K-PUR)-Lacke in einer Vielzahl unterschiedlicher Anwendungsbereiche, beispielsweise in der Fahrzeuglackierung oder Beschichtungen im Baubereich, Verwendung finden. Aufgrund ihrer relativ hohen Viskosität werden diese (sogenannten lichtechten) Lackpolyisocyanate dabei im allgemeinen mit Lösungsmitteln verdünnt eingesetzt.

Da Emissionen an toxikologisch oder ökologisch bedenklichen Lösungsmitteln aus Lacken und Beschichtungen reduziert werden sollen, sind in den letzten Jahren immer wieder Versuche unternommen worden, diese durch alternative Produkte, beispielsweise durch unpolare, umweltverträgliche Lösungsmittel, wie z.B. Testbenzin oder Terpentin-Öl, zu substituieren. 2K-PUR-Lacke konnten bisher noch nicht mit solchen unpolaren Lösungsmittel verdünnt werden, da diese Lösungsmittel mit den bekannten aliphatischen bzw. cycloaliphatischen Polyisocyanatvernetzern eine unzureichende Verträglichkeit aufweisen.

So sind beispielsweise die zur Herstellung lichtechter Polyurethanbeschichtungen besonders wichtigen aliphatischen bzw. cycloaliphatischen Polyisocyanate mit Biuret-, Isocyanurat- und/oder Uretdionstruktur auf Basis der großtechnisch gut zugänglichen Diisocyanate wie zum Beispiel Hexamethylendiisocyanat (HDI), und/oder 4,4'-Diisocyanatodicyclohexylmethan allesamt nur sehr schlecht in unpolaren organischen Lösungsmitteln löslich.

Deutlich bessere Löslichkeiten in unpolaren Solventien zeigen dagegen Allophanatmodifizierte Polyisocyanurate, wie sie beispielsweise gemäß EP-A 238 013, EP-A 496 208, EP-A 524 500, EP-A 524 501, EP-A 566 037, US 4 789 705, US 5 086 175, US 5 258 482, US 5 290 902, US 5 380 792, JP 0 430 621 8 A, JP 0 413 012 4 A, JP 0 413 017 1 A, JP 6 107 201 3 A oder JP 901 266 0 A durch Umsetzung aliphatischer und/oder cycloaliphatischer Diisocyanate mit linearen oder verzweigten aliphatischen oder cycloaliphatischen Monoalkoholen oder Diolen in Gegenwart von Trimerisierungskatalysatoren erhalten werden können. Bei der Herstellung solcher Allophanat-Trimerisate aus den monomeren Diisocyanaten zeigt sich aber nach einer nicht vorher bestimmbaren Latenzzeit eine Exothermie. Bei Batch-Ansätzen ist daher die Abführung der auftretenden Wärmeenergie notwendig was nicht immer einfach zu realisieren ist. Darüberhinaus führen die in den genannten Veröffentlichungen beschriebenen Allophanat modifizierten Polyisocyanurate, insbesondere solche auf Basis von Monoalkoholen, zu Beschichtungen mit erheblich schlechteren Lösungsmittel- und Chemikalienbeständigkeiten als entsprechende unmodifizierte Polyisocyanurate.

Reine Allophanatpolyisocyanate oder sogenannte Heteroallophanate, wie sie z. B. in der EP-A 807 623 beschrieben werden, besitzen ebenfalls eine gute Löslichkeit in unpolaren Lösungsmitteln. Auch diese Produkte führen jedoch zu Lackfilmen mit nur mäßigen Beständigkeitseigenschaften und sind daher als Vernetzerkomponenten für qualitativ hochwertige Beschichtungsmaterialien nur wenig geeignet. Dies gilt auch für Urethane aus Di- oder Polyisocyanaten und langkettigen Monoalkoholen oder Dimerdiol, die nach der Lehre der US 5 086 175, JP 0 413 278 2 A, JP 0 423 065 1 A und JP 0 726 805 9 A eine gute Verträglichkeit mit Kohlenwasserstoffen aufweisen.

Trimerisate spezieller Diisocyanate mit lipophilen Resten, beispielsweise cycloaliphatischer Diisocyanate mit einem an den cycloaliphatischen Ring gebundenen langkettigen aliphatischen Rest (z. B. EP-A 818 485), verzweigter linearaliphatischer Diisocyanate (z. B. DE-A 31 51 855) oder gesättigter aliphatischer bzw. cycloaliphatischer Diisocyanate mit 11-20 Kohlenstoff-Atomen (z. B. JP 0 324 462 3 A), wurden ebenfalls bereits als mit unpolaren Lösungsmitteln verdünnbare Polyisocyanatvernetzer vorgeschlagen. Diese speziellen Diisocyanate sind jedoch großtechnisch nicht verfügbar und entsprechend teuer.

In unpolaren Verbindungen gut lösliche isocyanatfunktionelle Prepolymere aus Polyisocyanaten und Polyolen werden beispielsweise in der DE-A 36 13 064, der US 3 304 286 oder JP 0 230 247 9 A beschrieben. Diese Produkte weisen häufig nur einen geringen Gehalt an freien Isocyanatgruppen und eine geringe Funktionalität auf. Sie eignen sich infolgedessen weniger als Vernetzerkomponente für 2K-PUR-Systeme sondern dienen vorzugsweise als allein einzusetzendes Bindemittel für feuchtigkeitshärtende Einkomponentenlacke.

Bislang sind daher keine lichtechten Polyisocyanate mit guter Löslichkeit in unpolaren Solventien bekannt, die sämtlichen Anforderungen der Praxis genügen, d.h. insbesondere die Herstellung hochvernetzter lösemittel- und chemikalienbeständiger Beschichtungen ermöglichen und gleichzeitig problemlos in einem einfachen kostengünstigen Verfahren zugänglich sind.

Aufgabe der vorliegenden Erfindung war es daher, neue Polyisocyanatgemische mit aliphatischen und/oder cycloaliphatischen Isocyanatgruppen zur Verfügung zu stellen, die nicht mit den genannten Nachteilen des Standes der Technik behaftet sind.

Diese Aufgabe konnte mit der Bereitstellung der nachstehend näher beschriebenen erfindungsgemäßen Polyisocyanatgemische bzw. des Verfahrens zu ihrer Herstellung gelöst werden. Die erfindungsgemäßen Polyisocyanatgemische basieren auf der überraschenden Beobachtung, daß sich durch Umsetzung monomerenarmer aliphatischer und/oder cycloaliphatischer Polyisocyanate mit Alkoholen unter Allophanatisierungsbedingungen hochfunktionelle Polyisocyanatgemische herstellen lassen, die auch bei niedriger Temperatur in unpolaren Lösungsmitteln gut löslich sind und in Kombination mit hydroxyfunktionellen Lackbindemitteln Beschichtungen liefern, die sich durch hervorragende Beständigkeiten auszeichnen.

Obwohl in einigen Veröffentlichungen, die die Herstellung Allophanatgruppen enthaltender Polyisocyanate zum Gegenstand haben, beispielsweise in der EP-A 000 194, EP-A 303 150 und EP-A 682 012 innerhalb langer Listen geeigneter Ausgangsisocyanate auch Polyisocyanate einer Funktionalität >2, wie z.B. Trimerisierungsprodukte von HDI oder IPDI, pauschal erwähnt werden, konnte der Fachmann keiner der obengenannten Veröffentlichungen irgendeinen konkreten Hinweis darauf entnehmen, daß unter Allophanatisierungsbedingungen hergestellte Umsetzungsprodukte monomerenarmer Polyisocyanate mit Alkoholen besonders gute Löslichkeitseigenschaften in unpolaren Lösungsmitteln aufweisen.

Gegenstand der vorliegende Erfindung ist ein Verfahren zur Herstellung von Polyisocyanatgemischen, auf Basis aliphatischer und/oder cycloaliphatischer Diisocyanate mit

a) einer mittleren Isocyanatfünktionalität von mindestens 2,0,

b) einem Gehalt an Isocyanatgruppen (berechnet als NCO; Molekulargewicht = 42) 4,0 bis 28,0 Gew.-% und

c) einem Gehalt an Alkoxygruppen mit bis zu 36 C-Atomen von 2,0 bis 37,5 Gew.-%,

dadurch gekennzeichnet, daß die Alkoxygruppen Bestandteil einer Allophanat- und gegebenenfalls einer Urethangruppe sind, wobei >50 mol-% der Alkoxygruppen Bestandteil von Allophanatgruppen sind und über die Allophanatgruppe mit jeweils mindestens zwei, jeweils aus mindestens zwei Diisocyanaten aufgebauten Polyisocyanatmolekülen verknüpft sind
dadurch gekennzeichnet ist, daß man

A) eine Polyisocyanatkomponente einer (mittleren) NCO-Funktionalität von 2,0 bis 5,0, einem Gehalt an aliphatisch und/oder cycloaliphatisch gebundenen Isocyanatgruppen (berechnet als NCO; Molekulargewicht = 42) von 8,0 bis 27,0 Gew.-% und einem Gehalt an monomeren Diisocyanaten von weniger als 1 Gew.-% aus beliebigen, durch Modifizierung einfacher aliphatischer und/oder cycloaliphatischer Diisocyanate hergestellten, aus mindestens zwei Diisocyanaten aufgebauten Polyisocyanaten mit Uretdion-und/oder Isocyanurat-und/oder Allophanat-und/oder Biuret-und/oder Iminooxadiazindion-und/oder Oxadiazintrionstruktur mit

B) bis zu 36 C-Atome aufweisenden Mono-Alkoholen

unter Einhaltung eines NCO/OH-Äquivalentverhältnisses von 1,9:1 bis 80:1 so miteinander umsetzt, daß >50 % der durch NCO/OH-Reaktion primär gebildeten Urethangruppen zu Allophanatgruppen weiterreagieren.

Wobei im übrigen Art und Mengenverhältnisse der genannten Ausgangsverbindungen so gewählt werden, daß die resultierenden Umsetzungsprodukte den oben unter a) bis c) genannten Bedingungen entsprechen.

Gegenstand der Erfindung ist auch die Verwendung dieser Polyisocyanatgemische als Ausgangskomponenten bei der Herstellung von Polyurethankunststoffen.

Gegenstand der Erfindung ist schließlich auch die Verwendung dieser Polyisocyanatgemische als Vernetzer für mit unpolaren Lösungsmitteln hochverdünnten oder verdünnbaren Lackbindemitteln oder Bindemittelkomponenten mit gegenüber Isocyanatgruppen reaktionsfähigen Gruppen zur Herstellung von Überzügen unter Verwendung von Beschichtungsmitteln auf Basis derartiger Bindemittel oder Bindemittelkomponenten.

Die beim erfindungsgemäßen Verfahren einzusetzende Komponente A) weist eine (mittlere) NCO-Funktionalität von 2,0 bis 5,0, vorzugsweise von 2,3 bis 4,5, einen Gehalt an Isocyanatgruppen von 8,0 bis 27,0 Gew.-%, vorzugsweise 14,0 bis 24,0 Gew.-% und einen Gehalt an monomeren Diisocyanaten von weniger als 1,0 Gew.-%, vorzugsweise 0.0001 bis 0,5 Gew.-% auf. Sie besteht aus mindestens einem organischen Polyisocyanat mit aliphatisch und/oder cycloaliphatisch gebundenen Isocyanatgruppen.

Es handelt sich bei den Polyisocyanaten bzw. Polyisocyanatgemischen der Komponente A) um beliebige, durch Modifizierung einfacher aliphatischer und/oder cycloaliphatischer Diisocyanate hergestellte, aus mindestens zwei Diisocyanaten aufgebaute Polyisocyanate mit Uretdion- und/oder Isocyanurat- und/oder Allophanat-und/oder Biuret-und/oder Iminooxadiazindion- und/oder Oxadiazintrionstruktur, wie sie beispielsweise in J. Prakt. Chem. 336 (1994) 185 - 200, den DE-A'en 16 70 666, 19 54 093, 24 52 532, 37 00 209 und 39 00 053 oder den EP-A'en 336 205, 339 396 und 798 299 beispielhaft beschrieben sind. Die Gemische können dabei sowohl physikalische als auch chemische Gemische als auch physikalische und chemische Gemische aus Polyisocyanaten sein.

Geeignete Diisocyanate zur Herstellung solcher Polyisocyanate sind grundsätzlich solche des Molekulargewichtsbereichs 140 bis 400 mit aliphatisch und/oder cycloaliphatisch gebundenen Isocyanatgruppen, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 2,4- bzw. 2,6-Diisocyanato-1-methylcyclohexan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, oder beliebige Gemische solcher Diisocyanate.

Bevorzugte Ausgangskomponenten A) sind Polyisocyanatgemische mit Isocyanurat-und/oder Iminooxadiazindionstruktur auf Basis von HDI und/oder IPDI und/oder 4,4'-Diisocyanatodicyclohexylmethan.

Bei der Komponente B) handelt es sich um gesättigte oder ungesättigte, lineare und verzweigte Monoalkohole, die bevorzugt 1 bis 36, besonders bevorzugt 1 bis 23 Kohlenstoffatome enthalten. Beispiele von solchen Monoalkoholen beinhalten: Methanol, Ethanol, n-Propanol, Isopropanol, n- Butanol, Isobutanol, tert.-Butanol, n-Pentanol, 2-Hydroxypentan, 3-Hydroxypentan, die Isomeren Methylbutylalkohole, die Isomeren Dimethylpropylalkohole, n-Hexanol, n-Heptanol, n-Oktanol, n-Nonanol, 2-Ethylhexanol, Trimethylhexanol, n-Decanol, n-Undecanol, n-Dodecanol (Laurylalkohol), n-Tetradecanol, n-Pentadecanol, n-Hexadecanol, n-Heptadecanol, n-Octadecanol (Stearylalkohol), 2,6,8-Trimethylnonanol, 2-tert.-Butylcyclohexanol, 4-Cyclohexyl-1-butanol, sowie lineare oder verzweigte primäre Alkohole der Art, wie sie zum Beispiel von der Fa. Henkel AG unter dem Handelsnamen Lorol® vertrieben werden. Als Komponente B) für das erfindungsgemäße Verfahren sind die genannten Monoalkohole, Mischungen dieser Monoalkohole sowie Gemische dieser Monoalkohole mit Dialkoholen und/oder höher funktionellen Alkoholen. Dialkohole und/oder höher funktionelle Alkohole, die ebenfalls bevorzugt n bis 36, besonders bevorzugt n bis 23 Kohlenstoffatome enthalten (mit n = OH-Funktionalität des Alkohols) umfassen z. B. 1,2-Ethandiol, 1,2- und 1,3-Propandiol, 1,2- und 1,4-Cyclohexandiol, 1,4-Cyclohexandimethanol, 4,4'-(1-Methylethyliden)-biscyclohexanol, die isomeren Butandiole, Pentandiole, Hexandiole, Heptandiole, Octandiole, Nonandiole, Decandiole, Undecandiole und höher molekulare Diole wie Octadecandiol-1,12, sowie höher funktionelle Alkohole wie zum Beispiel 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Geeignete, wenn auch weniger bevorzugte Alkohole B) im Sinne der vorliegenden Erfindung sind auch solche, die neben der Hydroxylgruppe noch weitere, gegenüber Isocyanatgruppen nicht reaktive funktionelle Gruppen, beispielsweise Estergruppen, Ethersauerstoff und/oder weitere Heteroatome, wie z.B. Halogenatome, Silicium oder Stickstoff enthalten.

Zur Durchführung des erfindungsgemäßen Verfahrens werden die Ausgangskomponenten A) und B) bei Temperaturen von 40 bis 180°C, vorzugsweise 50 bis 150°C, unter Einhaltung eines NCO-/OH-Äquivalent-Verhältnisses von 1,9:1 bis 80:1, vorzugsweise von 2:1 bis 50:1, so miteinander umgesetzt, daß >50 mol-%, vorzugsweise mindestens 80 mol-%, besonders bevorzugt mindestens 90 mol-% der durch NCO/OH-Reaktion primär gebildeten Urethangruppen zu Allophanatgruppen weiterreagieren.

Zur Beschleunigung der Allophanatisierungsreaktion können beim erfindungsgemäßen Verfahren gegebenenfalls geeignete Katalysatoren mitverwendet werden. Hierbei handelt es sich um die üblichen bekannten Allophanatisierungskatalysatoren, beispielsweise um Metallcarboxylate, Metallchelate oder tertiäre Amine der in der GB-PS 994 890 beschriebenen Art, um Alkylierungsmittel der in der US-PS 3 769 318 beschriebenen Art oder um starke Säuren, wie sie in der EP-A 000 194 beispielhaft beschrieben sind.

Geeignete Allophanatisierungskatalysatoren sind Metallverbindungenwie Zinkverbindungen, z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z.B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Aluminium-tri(ethylaceto-acetat), Eisen-(III)-chlorid, Kaliumoctoat, Bismut-, Mangan- Cobalt- oder Nickelverbindungen sowie starke Säuren, wie z.B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren für das erfindungsgemäße Verfahren sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A 649 866 Seite 4, Zeile 7 bis Seite 5, Zeile 15 beschrieben.

Bevorzugte Katalysatoren für das erfindungsgemäße Verfahren sind Zink-(II)-verbindungen und/oder Bismut-(III)-verbindungen der oben genannten Art. Ganz besonders bevorzugt ist die Verwendung Zink-(II)-n-octanoat, Zink-(II)-2-ethyl-1-hexanoat und/oder Zink-(II)-stearat und/oder Bismut-(III)-2-ethyl-1-hexanoat.

Diese Katalysatoren kommen beim erfindungsgemäßen Verfahren gegebenenfalls in einer Menge von 0,001 bis 5,0 Gew.-%, vorzugsweise 0,005 bis 1,0 Gew.-%, bezogen auf das Gesamtgewicht der Reaktionspartner zum Einsatz.

Die Zugabe der Katalysatoren zum Reaktionsgemisch kann dabei nach beliebigen Methoden erfolgen. So ist es beispielsweise möglich, den gegebenenfalls mitzuverwendenden Katalysator entweder der Polyisocyanatkomponente A) und/oder der Alkoholkomponente B) vor Beginn der eigentlichen Umsetzung zuzumischen. Ebenso ist es möglich, den Katalysator dem Reaktionsgemisch zu einem beliebigen Zeitpunkt während der Urethanisierungsreaktion oder im Sinne einer zweistufigen Reaktionsführung auch im Anschluß an die Urethanisierung, d.h. wenn der einem vollständigen Umsatz von Isocyanat- und Hydroxylgruppen theoretisch entsprechende Urethan-NCO-Gehalt erreicht ist, zuzusetzen. Ebenso können ein oder mehrere Bestandteile der Polyisocyanatkomponente A) zunächst mit dem Alkohol B) im Sinne einer Urethanisierungsreaktion umgesetzt werden und dann, d. h. wenn der einem vollständigen Umsatz von Isocyanat- und Hydroxylgruppen theoretisch entsprechende NCO-Gehalt erreicht ist, der Katalysator mit den übrigen Bestandteilen der Polyisocyanatkomponente A) zugesetzt werden.

Der Verlauf der Umsetzung kann beim erfindungsgemäßen Verfahren durch z. B. titrimetrische Bestimmung des NCO-Gehaltes verfolgt werden. Nach Erreichen des angestrebten NCO-Gehaltes, vorzugsweise wenn das molare Verhältnis von Allophanatgruppen zu Urethangruppen im Reaktionsgemisch mindestens 4:1, besonders bevorzugt mindestens 9:1, beträgt, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Allophanatisierungskatalysators der genannten Art kann die Umsetzung im durch Zugabe geeigneter Katalysatorgifte, beispielsweise Säurechloride wie Benzoylchlorid oder Isophthaloyldichlorid, abgestoppt werden. Diese Abstoppung ist aber im erfindungsgemäßen Verfahren nicht zwingend vorgesehen.

Im übrigen werden beim erfindungsgemäßen Verfahren Art und Mengenverhältnisse der Ausgangskomponenten im Rahmen der gemachten Angaben so gewählt, daß die resultierenden Polyisocyanatgemische den oben unter a) bis c) gemachten Angaben entsprechen, wobei a) die mittlere NCO-Funktionalität vorzugsweise 2,3 bis 9,9, besonders bevorzugt 2,8 bis 5,8, b) der NCO-Gehalt vorzugsweise 5,0 bis 24,0 Gew.-%, besonders bevorzugt 8,0 bis 21,0 Gew.-% und c) der Gehalt an Alkoxygruppen dadurch gekennzeichnet, daß die Alkoxygruppen Bestandteil einer Allophanat- und gegebenenfalls einer Urethangruppe sind, wobei >50 mol-%, vorzugsweise mindestens 80 mol-% und besonders bevorzugt mindestens 90 mol-% der Alkoxygruppen Bestandteil von Allophanatgruppen sind und über die Allophanatgruppe mit jeweils mindestens zwei, jeweils aus mindestens zwei Diisocyanaten aufgebauten Polyisocyanatmolekülen verknüpft sind, vorzugsweise 3,0 bis 29,0 Gew.-%, besonders bevorzugt 4,0 bis 20,0 Gew.-% beträgt.

Dabei soll der Gehalt an Alkoxygruppen wie in folgt definiert sein (Formel [1]):

$$\text{Gesamtmenge Alkoxygruppen} \;=\; \frac{\text{Masse Alkohole [g]}}{\text{Masse Polyisocyanate [g] + Masse Alkohole [g]}} \qquad [1]$$

Die gemachten Angaben bezüglich der NCO-Funktionalität der erfindungsgemäßen Verfahrensprodukte beziehen sich dabei auf den Wert, der sich rechnerisch aus Art und Funktionalität der Ausgangskomponenten nach der Formel [2]

$$F \;=\; \frac{\sum \text{val NCO} \;-\; \sum (1+x) \cdot \text{val OH}}{\sum \left( \dfrac{\text{val NCO}}{f_{NCO}} \right) + \sum \left( \dfrac{\text{val OH}}{f_{OH}} \right) - \sum (1+x) \cdot \text{val OH}} \qquad [2]$$

bestimmen läßt, in welcher x mit $1 \geq x \geq 0$ den Anteil der beim erfindungsgemäßen Verfahren zu Allophanatgruppen umgesetzten Urethangruppen bedeutet. Die Funktionalität $f_{NCO}$ der Ausgangspolyisocyanate A) läßt sich aus dem NCO-Gehalt und dem beispielsweise durch Gelpermeationschromatographie (GPC) oder Dampfdruckosmose bestimmten Molekulargewicht errechnen. $f_{OH}$ ergibt sich aus der Anzahl der OH-Gruppen der eingesetzten Alkohole bzw. bei Mischungen aus den Mengenverhältnissen und der jeweiligen Anzahl der OH-Gruppen der einzelnen Alkohole der Mischung.

Das erfindungsgemäße Verfahren kann gegebenenfalls, in einem geeigneten, gegenüber Isocyanatgruppen inerten Lösungsmittel durchgeführt werden. Geeignete Lösungsmittel sind z.B. die typischen Lacklösungsmittel, wie z. B. Ethylacetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha®, Solvesso®, Shellsol®, Isopar®, Nappar® und Diasol im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösungsmittel wie Propylenglykoldiacetat, Diethylenglykoldimethylether, Dipropylenglykoldimethylether, Diethylenglykolethyl-und -butyletheracetat, N-Methylpyrrolidon und N-Methylcaprolactam, oder beliebige Gemische solcher Lösungsmittel.

Die erfindungsgemäßen Verfahrensprodukte stellen klare, praktisch farblose Polyisocyanatgemische der bereits oben genannten Zusammensetzung dar, die sich im Gegensatz zu den obengannten unmodifizierten Ausgangspolyisocyanaten A) auch mit unpolaren Lösungsmitteln ohne Eintrübung verdünnen lassen und dabei selbst in großer Verdünnung, z. B. bei einem Festkörpergehalt von 30 Gew.-%, und auch bei niedrigen Temperaturen, z. B. bei -5°C bis +5°C, sedimentationsstabile Lösungen ergeben.

Zu diesen unpolaren Lösungsmitteln gehören z. B. Swasol 310 (Maruzen Petrochemical Co., Ltd.; Anilinpunkt 43,5°C), Exxon Naphtha No. 6 (Exxon Chemical Japan; Anilinpunkt 43°C), Exxon Naphtha No. 5 (Exxon Chemical Japan, Anilinpunkt 55°C) oder andere, wie sie beispielsweise in der EP-A 566 037 (S. 5; Z. 40-46) und US 5 086 175 (S. 4; Z. 43-55) beschrieben sind, oder beliebige Gemische solcher Lösungsmittel.

Gegebenenfalls können den nach dem erfindungsgemäßen Verfahren hergestellten Polyisocyanatgemischen noch weitere nicht erfindungsgemäß modifizierte Polyisocyanate, insbesondere Lackpolyisocyanate der obengenannten Art, zugesetzt werden, wobei die Mengenverhältnisse bevorzugt so gewählt werden, daß die resultierenden Polyisocyanatgemische den vorstehend unter a) bis c) genannten Bedingungen entsprechen, und somit ebenfalls erfindungsgemäße Polyisocyanatgemische darstellen, da diese im allgemeinen aus Gemischen aus

(i) erfindungsgemäß allophanat-modifizierten Polyisocyanaten und
(ii) nicht erfindungsgemäß modifizierten Polyisocyanaten der beispielhaft genannten Art bestehen.

Die erfindungsgemäßen Polyisocyanatgemische stellen wertvolle Ausgangsmaterialien zur Herstellung von Polyurethan-Kunststoffen nach dem Isocyanat-Polyadditionsverfahren dar.

Sie eignen sich in hervorragender Weise als Vernetzerkomponenten für Zweikomponenten-Polyurethanlacke (2K-PUR-Lacke), in denen als Polyhydroxylverbindungen beispielsweise die üblichen Polyetherpolyole, Polyesterpolyole und/oder Polyacrylatpolyole als Reaktionspartner für die Polyisocyanate vorliegen. Prinzipiell sind als Reaktionspartner für die erfindungsgemäßen Polyisocyanatgemische auch Lackbindemittel oder Lackbindemittelkomponenten mit anderen gegenüber Isocyanaten reaktiven Gruppen als Hydroxylgruppen geeignet. Hierzu zählen beispielsweise auch Polyurethane oder Polyharnstoffe, die aufgrund der in den Urethan- bzw. Harnstoffgruppen vorliegenden aktiven Wasserstoffatome mit Polyisocyanaten vernetzbar sind. Geeignete Reaktionspartner sind beispielsweise auch sekundäre Amine in der Art wie sie z.B. in EP-A 403 921 beschrieben sind oder Polyamine, deren Aminogruppen blockiert sind, wie z. B. Polyketimine, Polyaldimine oder Oxazolane, aus denen unter dem Einfluß von Feuchtigkeit freie Aminogruppen und, im Falle der Oxazolane, freie Hydroxylgruppen entstehen, die mit den erfindungsgemäßen Polyisocyanatgemischen abreagieren können. Gegebenenfalls können den erfindungsgemäßen Polyisocyanatgemischen in untergeordneten Mengen auch nicht-funktionelle Lackbindemittel zur Erzielung ganz spezieller Eigenschaften, beispielsweise als Additiv zur Haftverbesserung zugemischt werden.

In Zweikomponentenlacken auf Basis der erfindungsgemäßen Polyisocyanatgemische kommen die Polyisocyanat- und/oder Bindemittelkomponenten im allgemeinen in mit Lösungsmitteln verdünnter Form zum Einsatz. Bei diesen Lösungsmitteln handelt es sich beispielsweise um die oben bei der Durchführung des erfindungsgemäßen Verfahrens beschriebenen Lösungsmittel oder um beliebige Gemische solcher Lösungsmittel. Bevorzugt werden in 2K-PUR-Lacken auf Basis der erfindungsgemäßen Polyisocyanatgemische die Reaktionspartner jedoch in Form verdünnter Lösungen in unpolaren Lösungsmitteln, besonders bevorzugt in unpolaren Lösungsmitteln mit geringem umweltgefährdenden Potential, wie z.B. Swasol® 310 (Maruzen Petrochemical Co., Ltd.; Anilinpunkt 43,5°C), Exxon Naphtha No. 6 (Exxon Chemical Japan; Anilinpunkt 43°C), Exxon Naphtha No. 5 (Exxon Chemical Japan, Anilinpunkt 55°C) oder anderen, wie sie beispielsweise in der EP-A 566 037 (S. 5; Z. 40-46) und US 5 086 175 (S. 4; Z 43-55) beschrieben sind, oder beliebigen Gemischen solcher Lösungsmittel eingesetzt.

Selbstverständlich können die erfindungsgemäßen Polyisocyanatgemische auch in mit aus der Polyurethanchemie an sich bekannten Blockierungsmitteln in blockierter Form in Kombination mit den obengenannten Lackbindemitteln oder Lackbindemittelkomponenten im Sinne von Einkomponenten-PUR-Einbrennsystemen eingesetzt werden. Geeignete Blockierungsmittel sind beispielsweise Malonsäurediethylester, Acetessigester, Acetonoxim, Butanonoxim, ε-Caprolactam, 3,5-Dimethylpyrazol, 1,2,4-Triazol, Dimethyl-1,2,4-triazol, Imidazol oder beliebige Gemische dieser Blockierungsmittel.

Bei der erfindungsgemäßen Verwendung als Vernetzerkomponente für Lackbindemittel werden die erfindungsgemäßen Polyisocyanatgemische im allgemeinen in solchen Mengen eingesetzt, die einem Äquivalentverhältnis von (gegebenenfalls blockierten) NCO-Gruppen zu gegenüber NCO-Gruppen reaktionsfähigen Gruppen, insbesondere alkoholischen Hydroxylgruppen, von 0,5:1 bis 2,0:1, vorzugsweise von 0,8:1 bis 1,2:1, besonders bevorzugt von 0,9:1 bis 1,1:1 entsprechen.

Als Untergründe für die mit Hilfe der erfindungsgemäßen Polyisocyanatgemische formulierten Beschichtungen kommen beliebige Substrate in Betracht, wie z.B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im allgemeinen besitzen die mit den erfindungsgemäßen Polyisocyanatgemischen formulierten Beschichtungsmittel, denen gegebenenfalls die auf dem Lacksektor üblichen Hilfs- und Zusatzmittel, wie z.B. Katalysatoren, Verlaufshilfsmittel, Farbpigmente, Füllstoffe oder Mattierungsmittel, einverleibt werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260°C trocknen.

Die erfindungsgemäßen Polyisocyanatgemische ermöglichen die Formulierung qualitativ hochwertiger lichtechter Beschichtungsmittel, die im Vergleich zu den bislang bekannten lösemittelhaltigen 2K-PUR-Systemen geringe oder keine Emissionen an ökologisch bedenklichen Lösungsmitteln aufweisen und eine im Vergleich zu in herkömmlichen Lösungsmitteln gelösten Beschichtungsmitteln deutlich verbesserte Überstreichfähigkeit erreichen. Zudem werden durch die höhere Funktionalität, die die erfindungsgemäßen Polyisocyanatgemische gegenüber beispielsweise Allophanat-Trimerisaten aufweisen, bessere Lackeigenschaften wie z. B. Lösemittel- und Chemikalienbeständigkeit erreicht.

## Beispiele

Der Begriff "Allophanatisierungsgrad" bezeichnet den aus dem NCO-Gehalt errechenbaren prozentualen Anteil der zu Allophanatgruppen umgesetzten, aus Monoalkohol und Polyisocyanat entstandenen Urethangruppen. Alle übrigen Prozentangaben beziehen sich auf das Gewicht.

## Ausgangspolyisocyanate

### Polyisocyanat A1)

Iminooxadiazindiongruppen enthaltendes Polyisocyanat auf der Basis von 1,6-Diisocyanatohexan (HDI) mit einem NCO-Gehalt von 23,2 % mit einer mittleren Funktionalität von 3,3 (nach GPC) und einem Gehalt an monomeren HDI von 0,4 %, hergestellt gemäß EP-A 798 299.

### Polyisocyanat A2)

70 %-ige Lösung eines Isocyanuratgruppen enthaltenden Polyisocyanates auf der Basis von Isophorondiisocyanat (IPDI), hergestellt gemäß EP-A 003 765, in Solventnaphta, mit einem NCO-Gehalt von 11,8 % und einer mittleren Funktionalität von 3,3 (nach GPC) sowie einem Gehalt an monomeren IPDI von 0,2 %,

### Polyisocyanat A3)

Isocyanuratgruppen enthaltendes Polyisocyanat auf der Basis von HDI mit einem NCO-Gehalt von 23,6 % mit einer mittleren Funktionalität von 3,2 (nach GPC) und einem Gehalt an monomeren HDI von 0,3 %, hergestellt gemäß DE-A 3806276.

## Vergleichspolyisocyanate

### Vergleichspolyisocyanat V1)

Allophanat- und Isocyanuratgruppen enthaltendes Polyisocyanat auf der Basis von HDI mit einem NCO-Gehalt von 20 % mit einer mittleren Funktionalität von 2,4 (nach GPC) und einem Gehalt an monomeren HDI von 0,1 %, hergestellt gemäß EP-A 496 208.

## Beispiel 1

540 g des Polyisocyanates A1) und 360 g des Polyisocyanates A2) werden unter Rühren und trockenem Stickstoff mit 81,6 g Lorol® techn. (Fa. Henkel AG; Fettalkohol mit folgenden Kennzahlen: Säurezahl max. 0,1; Verseifungszahl max. 1,2, Hydroxylzahl: 265-279; Wassergehalt max 0,2%; Kettenverteilung: <C12: 0-3 %; C12: 48-58 %; C14: 18-24 %; C16: 8-12°%; C18: 11-15 %; >C18:0-1 %) versetzt und solange auf 80°C erhitzt bis der titrimetisch ermittelte NCO-Wert von 15,4 % erreicht wird. Dann gibt man 0,2 g Zink-(II)-2-ethyl-1-hexanoat zu. Durch die Zugabe der Zinkverbindung wird die Allophanatisierungsreaktion gestartet. Man erwärmt auf 110°C und rührt bei dieser Temperatur bis der der vollständigen Allophanatisierung entsprechende NCO-Wert von 13,7 % erreicht wird. Durch Zugabe von 0,01 g Benzoylchlorid und gleichzeitiges Abkühlen wird die Reaktion abgebrochen. Es liegt ein erfindungsgemäßes, praktisch farbloses klares Polyisocyanatgemisch mit folgenden Kenndaten vor:

NCO-Gehalt: 13,7 %
NCO-Funktionalität (nach Formel [2]): 3,93
Allophanatisierungsgrad: x = 1
Anteil Alkoxygruppen nach Formel [1]: 8,3 %

**Beispiel 2**

582,9 g des Polyisocyanates A1) und 582,9 g des Polyisocyanates A2) werden unter Rühren und trockenem Stickstoff mit 61,8 g Lorol® techn. (Fa. Henkel AG) und 4,5 g Octadecandiol-1,12 versetzt und solange auf 80°C erhitzt bis der titrimetisch ermittelte NCO-Wert von 15,4 % erreicht wird. Dann gibt man 0,25 g Zink-(II)-2-ethyl-1-hexanoat zu. Durch die Zugabe der Zinkverbindung wird die Allophanatisierungsreaktion gestartet. Man erwärmt auf 110°C und rührt bei dieser Temperatur bis der der titrimetisch ermittelte NCO-Wert von 14,4 % erreicht wird. Durch Zugabe von 0,01 g Benzoylchlorid und gleichzeitiges Abkühlen wird die Reaktion abgebrochen. Es liegt ein erfindungsgemäßes, praktisch farbloses klares Polyisocyanatgemisch mit folgenden Kenndaten vor:

NCO-Gehalt: 14,4 %
NCO-Funktionalität (nach Formel [2]): 3,68
Allophanatisierungsgrad: x = 0,94
Anteil Alkoxygruppen nach Formel [1]: 5,4 %

**Beispiel 3**

270 g des Polyisocyanates A1) und 180 g des Polyisocyanates A2) werden unter Rühren und trockenem Stickstoff mit 40,8 g Lorol® techn. (Fa. Henkel AG) versetzt und solange auf 80°C erhitzt bis der titrimetisch ermittelte NCO-Wert von 15,4 % erreicht wird. Dann gibt man 0,1 g Bismut-(III)-2-ethyl-1-hexanoat zu. Durch die Zugabe der Bismutverbindung wird die Allophanatisierungsreaktion gestartet. Man erwärmt auf 110°C und rührt bei dieser Temperatur bis der titrimetisch ermittelte NCO-Wert von 13,8 % erreicht wird. Durch Zugabe von 0,01 g Benzoylchlorid und gleichzeitiges Abkühlen wird die Reaktion abgebrochen. Es liegt ein erfindungsgemäßes, praktisch farbloses klares Polyisocyanatgemisch mit folgenden Kenndaten vor:

NCO-Gehalt: 13,8 %
NCO-Funktionalität (nach Formel [2]): 3,89
Allophanatisierungsgrad: x = 0,97
Anteil Alkoxygruppen nach Formel [1]: 8,3 %

**Beispiel 4**

666 g des Polyisocyanates A2) werden unter Rühren und trockenem Stickstoff bei 90°C vorgelegt und 62 g Lorol® techn. (Fa. Henkel AG) wird zugetropft bis der titrimetisch ermittelte NCO-Wert von 9,1 % erreicht ist. Dann werden 444 g des Polyisocyanates A3) und 0,24 g Zink-(II)-2-ethyl-1-hexanoat zugegeben. Durch die Zugabe der Zinkverbindung wird die Allophanatisierungsreaktion gestartet. Man erwärmt auf 110°C und rührt bei dieser Temperatur bis der der vollständigen Allophanatisierung entsprechende NCO-Wert von 13,5 % erreicht wird. Durch Zugabe von 0,01 g Benzoylchlorid und gleichzeitiges Abkühlen wird die Reaktion abgebrochen. Es liegt ein erfindungsgemäßes, praktisch farbloses klares Polyisocyanatgemisch mit den folgenden Kenndaten vor:

NCO-Gehalt: 13,5 %
NCO-Funktionalität (nach Formel [2]): 3,60
Allophanatisierungsgrad: x = 1
Anteil Alkoxygruppen nach Formel [1]: 5,3 %

### Beispiel 5

666 g des Polyisocyanates A2) und 444 g des Polyisocyanates A3) werden unter Rühren und trockenem Stickstoff bei 80°C vorgelegt und 62 g Lorol® techn. (Fa. Henkel AG) wird zugetropft bis der titrimetisch ermittelte NCO-Wert von 14,6 % erreicht ist. Dann werden und 0,24 g Zink-(II)-2-ethyl-1-hexanoat zugegeben. Durch die Zugabe der Zinkverbindung wird die Allophanatisierungsreaktion gestartet. Man erwärmt auf 110°C und rührt bei dieser Temperatur, bis der titrimetisch ermittelte NCO-Wert von 13,5 % erreicht wird. Durch Zugabe von 0,01 g Benzoylchlorid und gleichzeitiges Abkühlen wird die Reaktion abgebrochen. Es liegt ein erfmdungsgemäßes, praktisch farbloses klares Polyisocyanatgemisch mit den folgenden Kenndaten vor:

NCO-Gehalt: 13,5 %
NCO-Funktionalität (nach Formel [2]): 3,59
Allophanatisierungsgrad: x = 0,99
Anteil Alkoxygruppen nach Formel [1]: 5,3 %

### Beispiel 6

666 g des Polyisocyanates A2) und 444 g des Polyisocyanates A3) werden unter Rühren und trockenem Stickstoff bei 80°C vorgelegt und 62 g Lorol techn. (Fa. Henkel AG) wird zugetropft bis der titrimetisch ermittelte NCO-Wert von 14,6 % erreicht ist. Dann werden 0,29 g Zink-(II)-2-ethyl-1-hexanoat zugegeben. Durch die Zugabe der Zinkverbindung wird die Allophanatisierungsreaktion gestartet. Man erwärmt auf 110°C und rührt bei der Temperatur, bis der titrimetisch ermittelte NCO-Wert von 13,6 % erreicht wird. Durch Abkühlen wird die Reaktion abgebrochen. Es liegt ein erfindungsgemäßes, praktisch farbloses klares Polyisocyanatgemisch mit den folgenden Kenndaten vor:

NCO-Gehalt: 13,6 %
NCO-Funktionalität (nach Formel [2]): 3,55
Allophanatisierungsgrad: x = 0,93
Anteil Alkoxygruppen nach Formel [1]: 5,3 %

### Beispiel 7 (Verdünnungsstabilität)

Die erfindungsgemäßen Polyisocyanatgemische gemäß Beispiel 1-6 werden jeweils bei Raumtemperatur 30 %ig in Swasol® 310 (Fa. Maruzen Petrochemical Co., Ltd, Anilinpunkt: 43,5°C) gelöst. Bei der Herstellung der Lösung wird der durch das Polyisocyanat A2) eingebrachte Anteil an Lösungsmittel berücksichtigt. Anschließend wird die Verdünnungsstabilität der Lösungen bei 0°C über 14 Tage beobachtet. Als Vergleich dienten entsprechende Lösungen der unmodifizierten Ausgangspolyisocyanate A1), A2) und 3).

**Tabelle 1:** Prüfung der Lagerstabilität der hergestellten Lösungen

|  |  | Nach 14 Tagen Lagerung bei 0°C 30 %ig gelöst in Swasol 310 |
|---|---|---|
| Polyisocyanat gemäß Beispiel 1 | (erfindungsgemäß) | Klare Lösung |
| Polyisocyanat gemäß Beispiel 2 | (erfindungsgemäß) | Klare Lösung |
| Polyisocyanat gemäß Beispiel 3 | (erfindungsgemäß) | Klare Lösung |
| Polyisocyanat gemäß Beispiel 4 | (erfindungsgemäß) | Klare Lösung |
| Polyisocyanat gemäß Beispiel 5 | (erfindungsgemäß) | Klare Lösung |
| Polyisocyanat gemäß Beispiel 6 | (erfindungsgemäß) | Klare Lösung |
| Ausgangspolyisocyanat A1) | (Vergleich) | Zwei Phasen |
| Ausgangspolyisocyanat A2) | (Vergleich) | Zwei Phasen |
| Ausgangspolyisocyanat A3) | (Vergleich) | Zwei Phasen |
| Vergleichspolyisocyanat V1) | (Vergleich) | Klare Lösung |

Der Vergleich zeigt, daß sich die erfindungsgemäßen allophanat-modifizierten Polyisocynatgemische ebenso wie das Allophanat-Trimerisat V1) im Gegensatz zu den unmodifizierten Ausgangspolyisocyanaten A1), A2) und A3) deutlich besser in unpolaren Lösungsmitteln lösen.

**Beispiel 8 Verwendung**

Aus einem Stammlack, bestehend aus 63 Gew.-Teilen eines Polyacrylatpolyols, hergestellt durch Polymerisation von 44,62 % Styrol, 27,89 % Butylacrylat, 22,57 % Hydroxypropylmethacrylat, 1,82 % Methylmethacrylat und 0,60 % Acrylsäure in Gegenwart von 2,50 % Di-tert-butylperoxid als Initiator, mit einer OH-Zahl von 53 [mg KOH/g Substanz (bezogen auf Lieferform)], 0,6 Gew.-Teilen eines handelsüblichen Verlaufsmittels (Baysilone Lackadditiv OL 17, 10 %ig in Xylol), 1,1 Gew.-Teilen eines handelsüblichen Beschleunigers (Zink-2-ethylhexanoat, 10 %ig in Xylol) und 35,3 Gew.-Teilen Swasol 310 (Fa. Maruzen Petrochemical Co., Ltd; Anilinpunkt 43,5°C) als Lösungsmittel, und 75 %igen Lösungen der gemäß Beispiel 1 bis 6 erhaltenen erfindungsgemäßen Polyisocyanatgemischen in Swasol 310 wurden Klarlacke formuliert. Dabei wurden die Polyisocyanatkomponenten und der Stammlack jeweils im NCO/OH-Äquivalentverhältnis von 1:1 eingesetzt.

Die so erhaltenen Klarlackformulierungen wurden mit einem Aufziehrahmen auf eine Glasplatte aufgerakelt. Nach einer kurzen Ablüftzeit wurden die Filme im Trockenschrank bei 120°C für 30 min getrocknet, anschließend für 16 h bei 60°C gelagert.

Die Beständigkeit der so erhaltenen Lackfilme wurde mit verschiedenen Lösungsmitteln untersucht.

Dazu wird auf den ausgehärteten Lackfilm ein mit Lösemittel getränkter Wattebausch aufgebracht und die Stelle mit einem Uhrglas abgedeckt. Nach einer festgelegten Zeit (Einwirkzeit) werden Uhrglas und Wattebausch entfernt und eventuell verbliebene Lösemittelreste mit einem Zellstofftuch vorsichtig abgetupft. Das durch Lösemitteleinwirkung belastete Lackfilmsegment wird visuell untersucht.

| Lösemittel | Einwirkzeit |
|---|---|
| Xylol / MPA / Ethylacetat / Aceton | 1 min |
| Swasol 310 / Exxon 6 / Exxon 5 | 5 min und zur besseren Differenzierung zusätzlich auch 30 min |

Als Maß für die Härte des Filmes wird die Pendeldämpfung nach König angegeben (DIN 53 157).

Als Vergleich dienten analog hergestellte Lackfilme, die unter Verwendung des Vergleichspolyisocyanates V1) hergestellt wurden. Versuche mit den Ausgangsisocyanaten A1), A2) oder A3) einen analogen Lack herzustellen schlugen fehl, da sich die Ausgangsisocyanate nicht in den entsprechenden Lösungsmitteln lösen.

**Tabelle 2:** Eigenschaften der Lackfilme

| | Erfindungsgemäßes Polyisocyanatgemisch gemäß Beispiel: | | | | | | Vergleich: |
|---|---|---|---|---|---|---|---|
| | **1** | **2** | **3** | **4** | **5** | **6** | **V1)** |
| Filmoptik | klar | klar | klar | klar | klar | klar | klar |
| Beständigkeit gegen: | | | | | | | |
| Xylol | 0 | 0 | 0 | 0 | 0 | 0 | 4 |
| Methoxypropylacetat | 0 | 0 | 0 | 0 | 0 | 0 | 1 |
| Ethylacetat | 0 | 0 | 0 | 0 | 0 | 1 | 4 |
| Aceton | 0 | 0 | 1 | 0 | 1 | 1 | 4 |
| Swasol® 310*) | 0 | 0 | 0 | 0 | 0 | 0 | 1 |
| Exxon Naphta No. 5**) | 0 | 0 | 0 | 0 | 0 | 0 | 0 |
| Exxon Naphta No. 6***) | 0 | 0 | 0 | 0 | 0 | 0 | 0 |
| Pendeldämpfung nach König [DIN 53 157] | 201 | 198 | 195 | 200 | 197 | 198 | 194 |
| *) Fa. Maruzen Petrochemicals Co, Ltd. **) Fa. Exxon Chemical Japan ***) Fa. Exxon Chemical Japan | | | | | | | |

Bewertungsschlüssel:

| 0 | Film ist nach Behandlung unverändert |
|---|---|
| 1 | Film behält bleibende Markierung (Rand) |
| 2 | Film ist ankratzbar |
| 3 | Film ist abkratzbar |
| 4 | Film ist völlig zerstört |

Der Vergleich zeigt, daß der unter Verwendung des als Allophanat-Trimerisates V1) des Standes der Technik erhaltene Film nur mäßige Beständigkeitseigenschaften hat, während die erfindungsgemäßen Polyisocyanate gute Beständigkeiten gegenüber Lösungsmitteln aufweisen.

## Patentansprüche

1. Verfahren zur Herstellung von Polyisocyanatgemischen auf Basis aliphatischer und/oder cycloaliphatischer Diisocyanate mit

   a) einer mittleren Isocyanatfunktionalität von mindestens 2,0,
   b) einem Gehalt an Isocyanatgruppen (berechnet als NCO; Molekulargewicht = 42) 4,0 bis 28,0 Gew.-% und
   c) einem Gehalt an Alkoxygruppen mit bis zu 36 C-Atomen von 2,0 bis 37,5 Gew.-%,

   ,
   **dadurch gekennzeichnet, daß** die Alkoxygruppen Bestandteil einer Allophanat- und gegebenenfalls einer Urethangruppe sind, wobei >50 mol-% der Alkoxygruppen Bestandteil von Allophanatgruppen sind und über die Allophanatgruppe mit jeweils mindestens zwei, jeweils aus mindestens zwei Diisocyanaten aufgebauten Polyisocyanatmolekülen verknüpft sind.
   **dadurch gekennzeichnet, daß** man

   A) eine Polyisocyanatkomponente einer (mittleren) NCO-Funktionalität von 2,0 bis 5,0, einem Gehalt an aliphatisch und/oder cycloaliphatisch gebundenen Isocyanatgruppen (berechnet als NCO; Molekulargewicht = 42) von 8,0 bis 27,0 Gew.-% und einem Gehalt an monomeren Diisocyanaten von weniger als 1 Gew.-% aus beliebigen, durch Modifizierung einfacher aliphatischer und/oder cycloaliphatischer Diisocyanate hergestellten, aus mindestens zwei Diisocyanaten auf- gebauten Polyisocyanaten mit Uretdion- und/oder Isocyanurat- und/ oder Allophanat- und/oder Biuret- und/oder Iminooxadiazindion- und/oder Oxadiazintrionstruktur mit
   B) bis zu 36 C-Atome aufweisenden flono-Alkoholen

   unter Einhaltung eines NCO/OH-Äquivalentverhältnisses von 1,9:1 bis 80:1 so miteinander umsetzt, daß >50 % der durch NCO/OH-Reaktion primär gebildeten Urethangruppen zu Allophanatgruppen weiterreagieren.

2. Verfahren gemäß Anspruch 1, **dadurch gekennzeichnet, daß** man als Polyisocyanatkomponente A) ein Polyisocyanat mit einer (mittleren) NCO-Funktionalität von 2,3 bis 4,5, einem Gehalt an aliphatisch und/oder cycloaliphatisch gebundenen Isocyanatgruppen (berechnet als NCO; Molekulargewicht = 42) von 14,0 bis 24,0 Gew.-% und einem Gehalt an monomeren Diisocyanaten von weniger als 0,5 Gew.-% einsetzt.

3. Verfahren gemäß Anspruch 1, **dadurch gekennzeichnet, daß** die Polyisocyanatkomponente A) ein Isocyanurat- und/oder Iminooxadiazindionstrukturen aufweisendes Polyisocyanatgemisch auf der Basis von 1,6-Diisocyanatohexan und/oder 1-Isocyanato-3,3,5-trimethyl-5-isocyanatomethylcyclohexan ist.

4. Verfahren gemäß Anspruch 1, **dadurch gekennzeichnet, daß** die Polyisocyanatkomponente A) ein Isocyanurat- und Iminooxadiazindionstrukturen aufweisendes Polyisocyanatgemisch auf der Basis von 1,6-Diisocyanatohexan und 1-Isocyanato-3,3,5-trimethyl-5-isocyanatomethylcyclohexan ist.

5. Verfahren gemäß Anspruch 1, **dadurch gekennzeichnet, daß** man die Umsetzung in Gegenwart eines die Bildung von Allophanatgruppen beschleunigenden Katalysators auf der Basis organischer Zink(II)- oder Bismut(III)-verbindungen durchführt.

6. Verfahren gemäß Anspruch 5, **dadurch gekennzeichnet, daß** es sich bei der Komponente B) um eine Mischung von mono funktionellen Alkoholen handelt.

7. Polyisocyanatgemische erhältlich nach einem Verfahren gemäß einem der Ansprüche 1 bis 6.

8. Verwendung der Polyisocyanatgemische gemäß Anspruch 7 als Ausgangskomponente bei der Herstellung von Polyurethankunststoffen.

9. Verwendung der Polyisocyanatgemische gemäß Aspruch 7 als Vernetzerkomponente für Lackbindemittel oder Lackbindemittelkomponenten mit gegenüber Isocyanatgruppen reaktionsfähigen Gruppen.

10. Verwendung der Polyisocyanatgemische gemäß Anspruch 7 als Vernetzerkomponente für hydroxyfunktionelle Lackbindemittel oder Lackbindemittelkomponenten bei der Herstellung von Zweikomponenten-Polyurethanlacken.


## Claims

1. Process for preparing polyisocyanate mixtures based on aliphatic and/or cycloaliphatic diisocyanates and having

    a) an average isocyanate functionality of at least 2.0,
    b) a content of isocyanate groups (calculated as NCO; molecular weight = 42) of 4.0 to 28.0 wt. % and
    c) a content of alkoxy groups having up to 36 carbon atoms of 2.0 to 37.5 wt. %,

    **characterized in that** the alkoxy groups are constituents of an allophanate group and optionally of a urethane group, provided that > 50 mol % of the alkoxy groups are a constituent of allophanate groups and are connected via the allophanate group to at least two polyisocyanate molecules which are each synthesised from at least two diisocyanates, **characterized in that**

    a) a polyisocyanate component having an (average) NCO functionality of 2.0 to 5.0, a content of aliphatically and/or cycloaliphatically bound isocyanate groups (calculated as NCO; molecular weight = 42) of 8.0 to 27.0 wt. % and a content of monomeric diisocyanates of less than 1 wt. %, comprising any desired polyisocyanates prepared by modifying simple aliphatic and/or cycloaliphatic diisocyanates and synthesised from at least two diisocyanates, and having uretdione and/or isocyanurate and/or allophanate and/or biuret and/or iminooxadiazinedione and/or oxadiazinetrione structure, is reacted with
    b) monoalcohols having up to 36 carbon atoms, at an NCO/OH equivalent ratio of 1.9:1 to 80:1, such that > 50% of the urethane groups formed primarily by the NCO/OH reaction undergo further reaction to allophanate groups.

2. Process according to Claim 1, **characterized in that** polyisocyanate component A) used is a polyisocyanate having an (average) NCO functionality of 2.3 to 4.5, a content of aliphatically and/or cycloaliphatically bound isocyanate groups (calculated as NCO: molecular weight = 42) of 14.0 to 24.0 wt. % and a content of monomeric diisocyanates of less than 0.5 wt. %.

3. Process according to Claim 1, **characterized in that** the polyisocyanate component A) is a polyisocyanate mixture which is based on 1,6-diisocyanatohexane and/or 1-isocyanato-3,3,5-trimethyl-5-isocyanatomethylcyclohexane and which contains isocyanurate structures and/or iminooxadiazinedione structures.

4. Process according to Claim 1, **characterized in that** the polyisocyanate component A) is a polyisocyanate mixture which is based on 1,6-diisocyanatohexane and 1-isocyanato-3,3,5-trimethyl-5-isocyanatomethylcyclohexane and which contains isocyanurate structures and iminooxadiazinedione structures.

5. Process according to Claim 1, **characterized in that** the reaction is carried out in the presence of a catalyst which accelerates the formation of allophanate groups and is based on organic zinc(II) or bismuth(III) compounds.

6. Process according to Claim 5, **characterized in that** component B) comprises a mixture of monofunctional alcohols.

**7.** Polyisocyanate mixtures obtainable by a process according to any of Claims 1 to 6.

**8.** Use of the polyisocyanate mixtures according to Claim 7 as a starting component in the production of polyurethane plastics.

**9.** Use of the polyisocyanate mixtures according to Claim 7 as a crosslinker component for paint binders or paint binder components having isocyanate-reactive groups.

**10.** Use of the polyisocyanate mixtures according to Claim 7 as a crosslinker component for hydroxylfunctional paint binders or paint binder components in the production of two-component polyurethane paints.


**Revendications**

**1.** Procédé pour la préparation de mélanges de polyisocyanates à base de diisocyanates aliphatiques et/ou cycloaliphatiques avec

a) une fonctionnalité isocyanate moyenne d'au moins 2,0,
b) une teneur en groupes isocyanate (calculée comme NCO ; poids moléculaire = 42) de 4,0 à 28,0 % en poids et
c) une teneur en groupes alcoxy avec jusqu'à 36 atomes de C de 2,0 à 37,5 % en poids,

**caractérisés en ce que** les groupes alcoxy sont un constituant d'un groupe allophanate et éventuellement uréthane, > 50 % en mole des groupes alcoxy étant un constituant de groupes allophanate et étant reliés par l'intermédiaire des groupes allophanate avec à chaque fois au moins deux molécules de polyisocyanate constituées chacune d'au moins deux diisocyanates
**caractérisé en ce que** l'on fait réagir ensemble

A) un constituant polyisocyanate d'une fonctionnalité NCO (moyenne) de 2,0 à 5,0, une teneur en groupes isocyanate aliphatiquement et/ou cycloaliphatiquement liés (calculée comme NCO ; poids moléculaire = 42) de 8,0 à 27,0 % en poids et une teneur en diisocyanates monomères inférieure à 1 % en poids constitué de polyisocyanates quelconques constitués d'au moins deux diisocyanates, préparés par modification de diisocyanates simples aliphatiques et/ou cycloaliphatiques avec une structure uretdione et/ou isocyanurate et/ou allophanate et/ou biuret et/ou iminooxadiazinedione et/ou oxadiazinetrione avec
B) des monoalcools présentant jusqu'à 36 atomes de C en maintenant un rapport d'équivalent NCO/OH de 1,9 : 1 à 80 : 1, de telle sorte que > 50 % des groupes uréthane formés en premier par la réaction NCO/OH continuent à réagir pour former des groupes allophanate.

**2.** Procédé selon la revendication 1, **caractérisé en ce que** l'on utilise comme constituant polyisocyanate A) un polyisocyanate avec une fonctionnalité NCO (moyenne) de 2,3 à 4,5, une teneur en groupes isocyanate aliphatiquement et/ou cycloaliphatiquement liés (calculée comme NCO ; poids moléculaire = 42) de 14,0 à 24,0 % en poids et une teneur en diisocyanates monomères inférieure à 0,5 % en poids.

**3.** Procédé selon la revendication 1, **caractérisé en ce que** le constituant polyisocyanate A) est un mélange de polyisocyanates présentant des structures isocyanurate et/ou iminooxadiazinedione à base de 1,6-diisocyanatohexane et/ou de 1-isocyanato-3,3,5-triméthyl-5-isocyanatométhylcyclohexane.

**4.** Procédé selon la revendication 1, **caractérisé en ce que** le constituant polyisocyanate A) est un mélange de polyisocyanates présentant des structures isocyanurate et iminooxadiazinedione à base de 1,6-diisocyanatohexane et de 1-isocyanato-3,3,5-triméthyl-5-isocyanatométhylcyclohexane.

**5.** Procédé selon la revendication 1, **caractérisé en ce que** l'on réalise la réaction en présence d'un catalyseur accélérant la formation de groupes allophanate à base de composés organiques du zinc (II) ou du bismuth (III).

**6.** Procédé selon la revendication 5, **caractérisé en ce qu'**il s'agit pour le constituant B) d'un mélange d'alcools monofonctionnels.

**7.** Mélanges de polyisocyanates obtenus selon un procédé selon l'une quelconque des revendications 1 à 6.

**8.** Utilisation des mélanges de polyisocyanates selon la revendication 7 comme constituants de départ dans la préparation de matières plastiques de polyuréthane.

**9.** Utilisation des mélanges de polyisocyanates selon la revendication 7 comme constituant d'agent de réticulation pour un liant de laque ou des constituants de liants de laques avec des groupes pouvant réagir avec des groupes isocyanate.

**10.** Utilisation des mélanges de polyisocyanates selon la revendication 7 comme constituant d'agent de réticulation pour des liants de laques hydroxyfonctionnels ou des constituants de liants de laques dans la préparation de laques de polyuréthane biconstituantes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 238013 A
- EP 496208 A
- EP 524500 A
- EP 524501 A
- EP 566037 A
- US 4789705 A
- US 5086175 A
- US 5258482 A
- US 5290902 A
- US 5380792 A
- JP 04306218 A
- JP 04130124 A
- JP 04130171 A
- JP 61072013 A
- JP 9012660 A
- EP 807623 A
- JP 04132782 A
- JP 04230651 A
- JP 07268059 A
- EP 818485 A
- DE 3151855 A
- JP 03244623 A
- DE 3613064 A
- US 3304286 A
- JP 02302479 A
- EP 000194 A
- EP 303150 A
- EP 682012 A
- DE 1670666 A
- DE 1954093 A
- DE 2452532 A
- DE 3700209 A
- DE 3900053 A
- EP 336205 A
- EP 339396 A
- EP 798299 A
- GB PS994890 A
- US PS3769318 A
- EP 649866 A
- EP 403921 A
- EP 003765 A
- DE 3806276 A

**In der Beschreibung aufgeführte Nicht-Patentliteratur**

- *J. Prakt. Chem.,* 1994, vol. 336, 185-200